(19) Europäisches Patentamt / European Patent Office / Office européen des brevets

(11) **EP 3 072 231 B1**

(12) **FASCICULE DE BREVET EUROPEEN**

(45) Date de publication et mention de la délivrance du brevet:
**02.08.2017 Bulletin 2017/31**

(21) Numéro de dépôt: **14809935.1**

(22) Date de dépôt: **17.11.2014**

(51) Int Cl.:
*H02P 9/10* *(2006.01)*  *H02P 9/30* *(2006.01)*
*B60L 1/00* *(2006.01)*

(86) Numéro de dépôt international:
**PCT/FR2014/052936**

(87) Numéro de publication internationale:
**WO 2015/075363 (28.05.2015 Gazette 2015/21)**

(54) **BOUCLE DE RÉGULATION PROPORTIONNELLE INTÉGRALE POUR UN DISPOSITIF RÉGULATEUR NUMÉRIQUE DE MACHINE ÉLECTRIQUE TOURNANTE A EXCITATION DE VÉHICULE AUTOMOBILE**

PROPORTIONALER INTEGRIERTER REGELKREIS FÜR EINE DIGITALE REGLERVORRICHTUNG FÜR ELEKTRISCHE ERREGUNGSROTATIONSMASCHINE EINES KRAFTFAHRZEUGS

PROPORTIONAL INTEGRAL REGULATING LOOP FOR A DIGITAL REGULATOR DEVICE FOR AUTOMOTIVE VEHICLE EXCITATION ROTATING ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2013 FR 1361327**

(43) Date de publication de la demande:
**28.09.2016 Bulletin 2016/39**

(73) Titulaire: **Valeo Equipements Electriques Moteur 94046 Créteil Cedex (FR)**

(72) Inventeurs:
• **CHASSARD, Pierre**
  **94000 Créteil (FR)**
• **TISSERAND, Pierre**
  **94450 Limeil Brevannes (FR)**
• **LABISTE, Laurent**
  **94100 Saint Maur des Fossés (FR)**
• **MASSEMIN, Geoffrey**
  **62630 Lefaux (FR)**

(74) Mandataire: **Duprez, Richard**
  **Valeo Equipements Électriques Moteur**
  **2, rue André Boulle**
  **94046 Creteil Cedex (FR)**

(56) Documents cités:
**EP-A1- 0 481 862    EP-A1- 0 802 606**

• **FANUCCI L ET AL: "An high voltage CMOS voltage regulator for automotive alternators with programmable functionalities and full reverse polarity capability", 2010 DESIGN, AUTOMATION & TEST IN EUROPE CONFERENCE & EXHIBITION : DATE 2010 ; DRESDEN, GERMANY, 8 - 12 MARCH 2010, IEEE, PISCATAWAY, NJ, US, 8 mars 2010 (2010-03-08), pages 526-531, XP032318002, DOI: 10.1109/DATE.2010.5457150 ISBN: 978-1-4244-7054-9 cité dans la demande**
• **CHARAABI L ET AL: "Presentation of an efficient design methodology for FPGA implementation of control systems application to the design of an antiwindup PI controller", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK, NY, US, vol. 3, 5 novembre 2002 (2002-11-05), pages 1942-1947, XP010633008, DOI: 10.1109/IECON.2002.1185269 ISBN: 978-0-7803-7474-4 cité dans la demande**

**Description**

**DOMAINE TECHNIQUE DE L'INVENTION.**

La présente invention concerne une boucle de régulation proportionnelle intégrale pour un dispositif régulateur numérique de machine électrique tournante à excitation de véhicule automobile.

**ARRIERE PLAN TECHNOLOGIQUE DE L'INVENTION.**

De manière connue en soi, une machine électrique tournante à excitation est, à la différence d'une machine électrique à aimants permanents, capable de produire un couple moteur, ou de fournir de l'énergie électrique, uniquement quand son inducteur est parcouru par un courant d'excitation.

Un type commun de machine électrique tournante à excitation, très utilisée dans le domaine de l'automobile pour les fonctions d'alternateur et de démarreur, comprend un inducteur tournant et un stator à plusieurs enroulements.

Quand la machine fonctionne en alternateur, le courant généré dans les enroulements du stator par l'inducteur en rotation est redressé de manière à délivrer à la batterie du véhicule un courant continu.

Cette tension dépend de la vitesse de rotation de l'inducteur, de la charge connectée et du courant d'excitation.

Pour les applications à l'automobile, la tension de sortie doit être régulée de manière à rester constante quelle que soit la vitesse de rotation de l'alternateur et quelle que soit la charge de la batterie.

Pour ce faire, la tension de sortie est mesurée et comparée à une valeur de consigne par un dispositif régulateur qui commande le courant d'excitation de manière à minimiser toute différence.

La société VALEO EQUIPEMENTS ELECTRIQUES MOTEUR a déjà proposé d'effectuer cette régulation à partir de mesures par échantillonnage à l'aide de techniques numériques, qui procurent des avantages substantiels par rapport aux procédés analogiques classiques, notamment dans ses brevets européens EP 0 481 862 et EP 0 802 606.

Dans la conception d'un dispositif régulateur moderne, l'asservissement de la tension de sortie à une valeur de consigne s'appuie sur la théorisation d'une boucle de régulation proportionnelle (P) ou proportionnelle intégrale (PI).

Les algorithmes correspondants adaptés aux spécifications des constructeurs d'automobiles peuvent être par exemple implémentés dans un FPGA (acronyme de « Field Programmable Gate Array » en anglais, c'est-à-dire « Circuit intégré prédiffusé programable ») associé à un ASIC (acronyme de « Application Specific Integrated Circuit » en anglais, c'est-à-dire « Circuit intégré spécifique à une application ») qui gère l'interface analogique avec l'alternateur ayant des caractéristiques propres à l'équipementier, comme le montre l'article "An High Voltage CMOS Voltage Regulator for automotive alternators with programmable functionnalities and full reverse polarity capability", P. Chassard, L. Labiste, P. Tisserand et al., Design, Automation & Test in Europe Conference & Exhibition (DATE), 2010, EDAA.

L'utilisation de FPGA permet d'implémenter notamment des améliorations aux boucles de régulation PI classiques, tels que des systèmes anti-saturation, dont un exemple est donné dans l'article "Presentation of an Efficient Design Methodology for FPGA. Implementation of Control Systems. Application to the Design of Antiwindup PI Controller", L. Chaarabi, E. Monmasson, I. Slama-Belkhodja, 28 th Annual Conference of the IECON, 2002, IEEE.

Les auteurs de ce dernier article montrent qu'ils obtiennent une réponse à un échelon sans surdépassement, mais ne donnent aucune indication quant au délai de retour par rapport à une boucle ouverte.

Or, dans le domaine d'application aux dispositifs régulateurs pour alternateurs de véhicule automobile, l'entité inventive a identifié un besoin d'une boucle de régulation permettant d'obtenir un temps de retour lors d'un transitoire d'un mode de boucle ouverte vers un mode de régulation linéaire le plus court possible, c'est-à-dire de retrouver un niveau de tension régulée attendue le plus rapidement possible.

**DESCRIPTION GENERALE DE L'INVENTION.**

La présente invention vise à satisfaire ce besoin et a précisément pour objet une boucle de régulation proportionnelle intégrale pour un dispositif régulateur numérique de machine électrique tournante à excitation de véhicule automobile.

Cette machine est du type de celles aptes à fonctionner en génératrice délivrant une tension de sortie ajustée par un courant d'excitation.

Le dispositif régulateur numérique comporte des moyens de commande du courant d'excitation et la boucle de régulation qui comprend:

- en entrée, des moyens de mesure par échantillonnage de la tension de sortie générant un signal de mesure;
- des moyens de calcul d'erreur générant un signal d'erreur égal à une différence entre le signal de mesure et une valeur de consigne;
- des moyens de traitement de ce signal d'erreur générant un signal de régulation comprenant en parallèle un premier amplificateur, un intégrateur et un système anti-saturation;

- en sortie, des moyens de génération d'un signal de commande commandant les moyens de commande en fonction du signal de régulation.

Conformément à l'invention, le système anti-saturation de la boucle de régulation est à détection conditionnelle.

On tire bénéfice du fait que ce système anti-saturation comprend un détecteur de saturation générant un signal de déconnexion commandant un commutateur déconnectant l'intégrateur des moyens de calcul d'erreur en cas de détection d'un état de saturation du signal de régulation.

Avantageusement, l'intégrateur est un intégrateur numérique pur, présentant de préférence une première fonction de transfert de la forme:

$$FT0(z) = \frac{a}{1 - Z^{-1}}$$

Alternativement, fort avantageusement, l'intégrateur est un filtre numérique passe-bas, présentant préférentiellement une seconde fonction de transfert de la forme:

$$FT1(z) = \frac{b}{1 - (1 - b).Z^{-1}}$$

Une fréquence de coupure de ce filtre numérique est comprise sensiblement dans une bande de fréquence allant de 10 mHz à 1 Hz.

Selon une autre caractéristique, la boucle de régulation selon l'invention comprend en outre un second amplificateur en série avec l'intégrateur.

On tire bénéfice du fait qu'un gain intégrateur de ce second amplificateur présente une valeur prédéterminée de manière à diminuer une erreur statique tout en garantissant une stabilité du dispositif régulateur numérique.

Selon encore une autre caractéristique, dans la boucle de régulation selon l'invention, le commutateur déconnectant l'intégrateur est commandé en outre par un signal de contrôle de charge progressive.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est une représentation schématique d'une machine électrique tournante à excitation connue de l'état de la technique, munie d'un dispositif régulateur numérique comportant une boucle de régulation, et de son utilisation sur le réseau de bord d'un véhicule automobile.

La **Figure 2** est un schéma de principe d'une boucle de régulation du dispositif régulateur numérique montré sur la **Figure 1**, d'un type "proportionnelle intégrale" connu de l'état de la technique et comprenant un circuit anti-saturateur.

La **Figure 3** est un schéma de principe d'une boucle de régulation proportionnelle intégrale dans un premier mode de réalisation préféré de l'invention.

La **Figure 4** est un ensemble de chronogrammes montrant une première réponse à un échelon de la boucle de régulation montrée sur la **Figure 3.**

La **Figure 5** est un schéma de principe détaillé d'une boucle de régulation proportionnelle intégrale dans un second mode de réalisation préféré de l'invention.

La **Figure 6** est une courbe de réponse en fréquence d'un filtre numérique passe bas mis en oeuvre dans la boucle de régulation montrée sur la **Figure 5.**

La **Figure 7** montre le principe de fonctionnement d'un système anti-saturation à détection conditionnelle mis en oeuvre dans la boucle de régulation selon l'invention.

La **Figure 8** est un ensemble de chronogrammes montrant une seconde réponse à un échelon de la boucle de régulation montrée sur la **Figure 5.**

## DESCRIPTION DES MODES DE REALISATION PREFERES DE L'INVENTION.

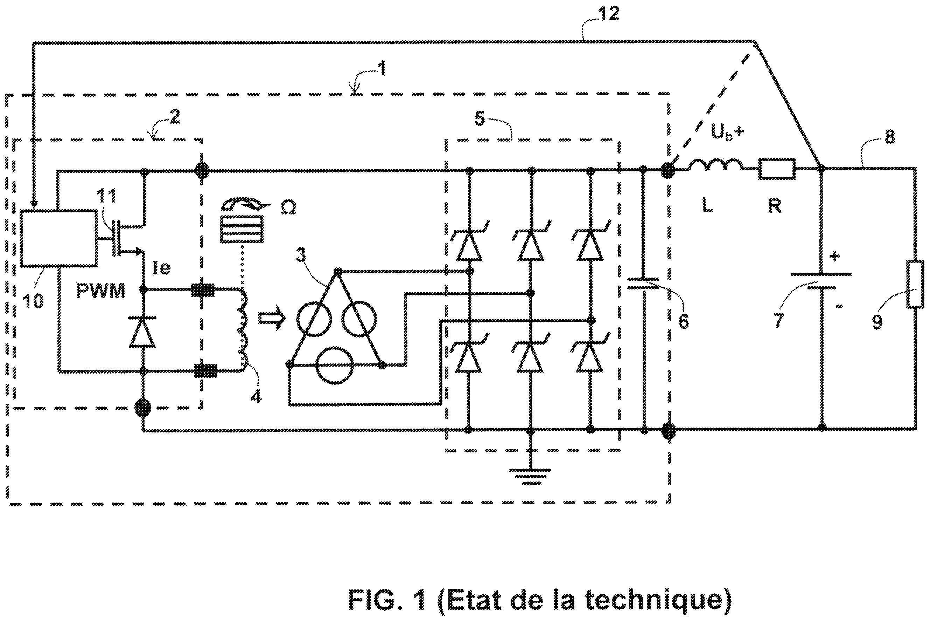

La machine électrique tournante à excitation représentée schématiquement sur la **Figure 1** est, à titre d'exemple non limitatif, un alternateur triphasé 1 muni d'un dispositif régulateur numérique 2.

Le stator 3 de l'alternateur 1 comporte trois enroulements soumis au champ tournant créé par l'inducteur 4 parcouru par un courant d'excitation $I_e$.

Le courant alternatif produit dans le stator 3 est redressé par un bloc de redressement 5 et filtré par un condensateur 6 de sorte que l'alternateur 1 délivre une tension de sortie continue $U_b$+ à la batterie 7 et au réseau de bord du véhicule 8 alimentant des charges 9 (une liaison par un câble de puissance étant schématisée par une self L et une résistance R).

La tension de sortie $U_b$+ de l'alternateur 1 est maintenue constante au moyen d'une boucle de régulation 10, quand la charge 9 et la vitesse de rotation $\Omega$ varient, en agissant sur des moyens de commande 11 du courant d'excitation le à partir de mesures 12 par échantillonnage de cette tension de sortie $U_b$+.

Les moyens de commande 11 du courant d'excitation le sont généralement constitués de transistors de puissance 11 fonctionnant en commutation et commandés par un signal rectangulaire de rapport cyclique variable PWM.

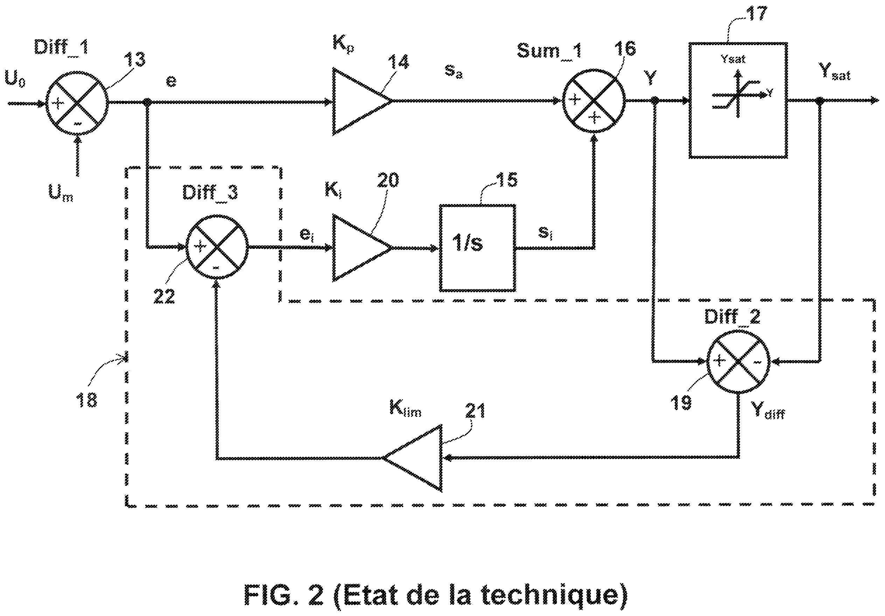

Dans les alternateurs 1 les plus récents connus de l'état de la technique, la boucle de régulation 10 est le plus souvent une boucle de régulation proportionnelle ou proportionnelle intégrale équipée d'un système anti-saturation à rétroaction calculée du type montré sur la **Figure 2.**

La boucle de régulation 10 comprend en entrée des moyens de mesure constitués généralement par un convertisseur analogique-numérique pour échantillonner la tension de sortie $U_b$+ de l'alternateur 1 et générer un signal de mesure Um qui est comparé à une valeur de consigne $U_0$.

Des moyens de calcul d'erreur 13 génèrent avec un premier opérateur «Diff_1» un signal d'erreur e égal à une différence entre le signal de mesure $U_m$ et la valeur de consigne $U_0$.

Dans la structure parallèle représentée sur la **Figure 2,** le signal d'erreur e est amplifié par un premier amplificateur 14 présentant un gain proportionnel $K_p$ prédéterminé et est intégré par un intégrateur 15.

Une tension de sortie $S_a$ du premier amplificateur 14 et une tension de sortie $S_i$ de l'intégrateur 15 sont sommées 16 pour produire un signal de régulation intermédiaire Y.

Un bloc de saturation 17 permet d'adapter le format des données de la boucle de régulation 10 à celui de moyens de génération du signal de commande PWM en sortie, en fournissant un signal de régulation $Y_{sat}$ à partir du signal de régulation intermédiaire Y.

Cette boucle de régulation d'un type connu comprend en outre un système anti-saturation à rétroaction calculée 18, dont le fonctionnement est les suivant:

- Mode non saturé.

Une grandeur $Y_{diff}$ représente une différence entre une production d'erreur avant saturation Y et après saturation $Y_{sat}$ réalisée par un second opérateur «Diff_2» 19.

Lorsque la boucle est non saturée, la grandeur $Y_{diff}$ est nulle et ne perturbe pas le fonctionnement de la boucle proportionnelle intégrale 10 (avec un second amplificateur 20 de gain intégrateur $K_i$ en série avec l'intégrateur 15 présentant une première fonction de transfert de forme FT=1/s). Le système anti saturation 18 est considéré comme déconnecté.

Mathématiquement,

$$\text{SI } (Y=Y_{sat}) \text{ ALORS } e_i = e$$

où $e_i$ est un signal d'erreur intermédiaire à l'entrée du second amplificateur 20 précédent l'intégrateur 15.

- Mode saturé

La grandeur $Y_{diff}$ est non nulle en mode saturé.

La grandeur $Y_{diff}$ en mode saturé vient atténuer de façon plus ou moins importante (suivant un gain saturateur $K_{lim}$ d'un amplificateur additionnel 21) l'erreur de boucle $S_i$ générée par la partie intégrale 15, 20 via une différence réalisée par un troisième opérateur «Diff_3» 22.

Mathématiquement,

$$SI\ (Y \neq Y_{sat})\ ALORS\ e_i\ =\ e - K_{lim}.\ (Y-Y_{sat})$$

Il est à noter que la structure du type « système anti saturation à rétroaction calculée » 18 comporte deux opérateurs de différences («Diff_2» 19 et «Diff_3» 22) et un amplificateur $K_{lim}$ appliqué à un intégrateur pur 15.

La problématique rencontrée dans ce type de circuit connu de l'état de la technique est d'obtenir un temps de retour lors du transitoire du mode saturé vers le mode non saturé le plus performant possible pour une application à un régulateur d'alternateur.

Une boucle de régulation 10 proportionnelle intégrale selon l'invention, comportant, à la différence des boucles de régulation connues de l'état technique, un système anti-saturation à détection conditionnelle 23, permet d'optimiser le temps de retour vers le mode non saturé.

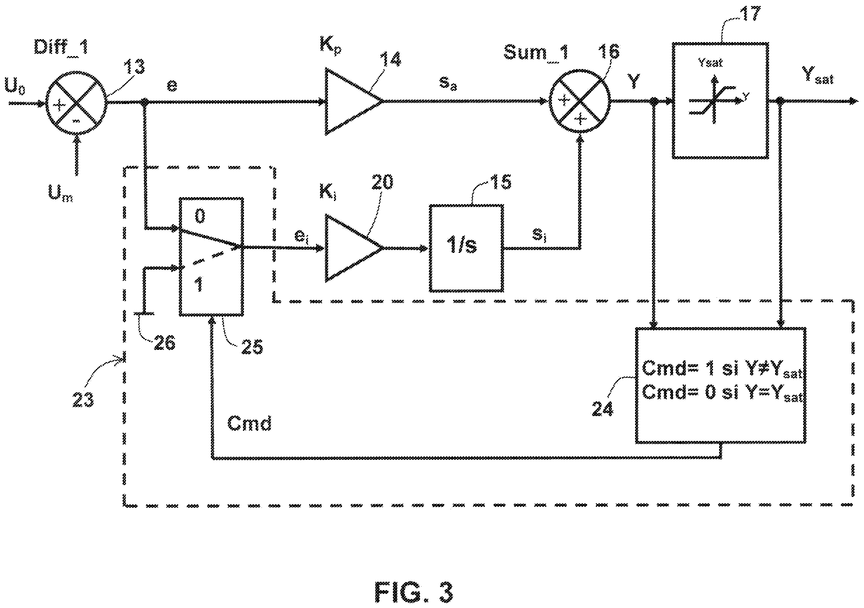

Un schéma de principe de la boucle de régulation 10 dans un premier mode préféré de réalisation de l'invention est montré sur la **Figure 3.**

Selon l'invention, la partie intégrale 15, 20 de la boucle de régulation 10 comprenant le second amplificateur 20 et l'intégrateur 15 est connectée ou déconnectée par le système anti-saturation 23 en fonction de l'état de saturation du signal de régulation $Y_{sat}$.

Pour ce faire, le système anti-saturation 23 comprend un détecteur de saturation 24 qui génère un signal de déconnexion Cmd commandant un commutateur 25 appliquant sur l'entrée du second amplificateur 20, soit le signal d'erreur e, soit une tension ayant une valeur prédéterminée telle que la valeur zéro, valeur zéro fixée à la **Figure 3** par une mise à la masse 26.

Le fonctionnement de ce système anti-saturation 23 dans la boucle de régulation 10 proportionnelle intégrale selon l'invention est le suivant:

- Mode non saturé

Lorsque le signal de déconnexion Cmd est dans un état logique nul, le mode non saturé est détecté. Le commutateur 25 connecte le signal d'erreur e à l'entrée de la partie intégrale 15, 20 (c'est-à-dire avec le second amplificateur 20 de gain intégrateur $K_i$ en série avec l'intégrateur 15 présentant une fonction de transfert FT=1/s).

Le système anti saturation 23 est considéré comme déconnecté.

Mathématiquement,

$$SI\ (Y=Y_{sat})\ ALORS\ Cmd = 0\ et\ e_i = e.$$

où $e_i$ est le signal d'erreur intermédiaire à l'entrée du second amplificateur 20 précédent l'intégrateur 15.

Mode saturé

Lorsque le signal de commande Cmd est dans l'état logique 1, le mode saturé est détecté. Le commutateur 25 connecte alors l'entrée de la partie intégrale 15, 20 à une tension nulle afin de stopper l'évolution de tension de sortie $S_i$ de la partie intégrale 15, 20.

Mathématiquement,

$$SI\ (Y \neq Y_{sat})\ ALORS\ Cmd = 1\ et\ e_i = 0\ .$$

La tension de sortie $S_i$ de la partie intégrale 15, 20 peut rester figée à une valeur constante pendant le mode saturé, suivant le mode de réalisation.

En effet, l'opérateur d'intégration pure (FT=1/s, écriture de Laplace) effectue une opération par rapport au temps non bornée [0,+∞[ définie par la fonction mathématique :

$$s_i = K_i . \int_{0}^{+\infty} (e_i).dt$$

Il en résulte que $S_i$ est égal à la valeur de $S_i$ au moment du passage en mode saturé.

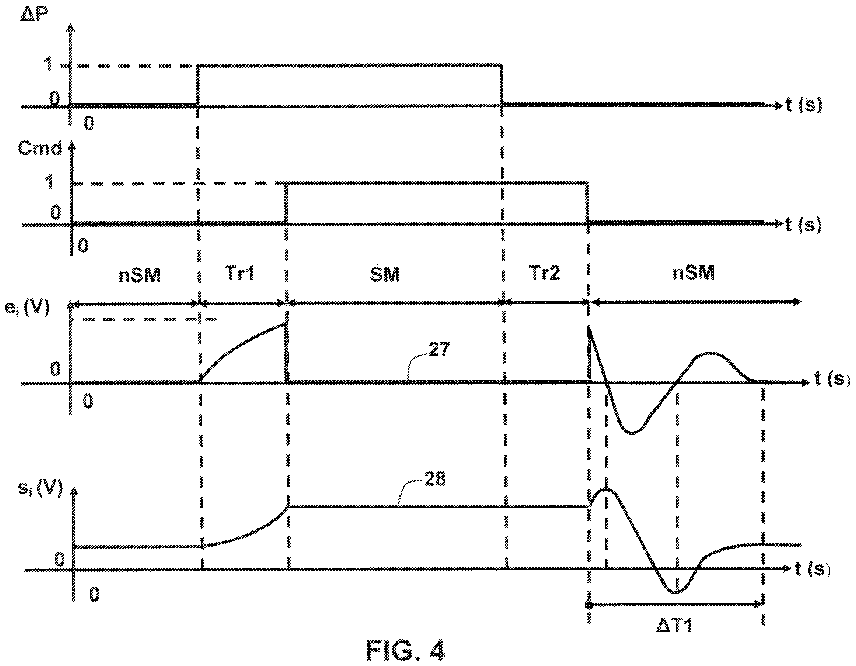

Le chronogramme correspondant de la **Figure 4** montre bien l'évolution de la tension de sortie $S_i$ de l'intégrateur 15 de cette boucle de régulation 10 lors d'une variation de charge $\Delta P$ (du mode non saturé nSM vers un mode saturé SM mais aussi du mode saturé SM vers un mode non saturé nSM).

Après un premier état transitoire Tr1 résultant du délai entre la variation de charge $\Delta P$ et sa détection par le détecteur de saturation 24, le signal d'erreur intermédiaire $e_i$ à l'entrée du second amplificateur 20 précédent l'intégrateur 15 est forcé à une valeur nulle 27 comme suite à la commande du commutateur 25 par le signal de déconnexion Cmd.

Pendant toute la durée du mode saturé SM, la tension de sortie $S_i$ de l'intégrateur 15 est donc figée 28.

Après un second état transitoire Tr2 résultant du délai entre la fin de la variation de charge $\Delta P$ et sa détection par le détecteur de saturation 24, le signal d'erreur intermédiaire $e_i$ à l'entrée du second amplificateur 20 précédent l'intégrateur 15 est égal au signal d'erreur e comme suite à la commande du commutateur 25 par le signal de déconnexion Cmd.

Le système anti-saturation à détection conditionnelle 23 permet d'obtenir un premier temps de retour $\Delta T1$ en mode non saturé voisin de l'optimum.

Toutefois, ainsi que cela a déjà été mentionné, la problématique rencontrée dans ce type de circuit est d'obtenir un temps de retour lors du transitoire Tr2 du mode saturé SM vers le mode non saturé nSM le plus performant possible au regard de l'application.

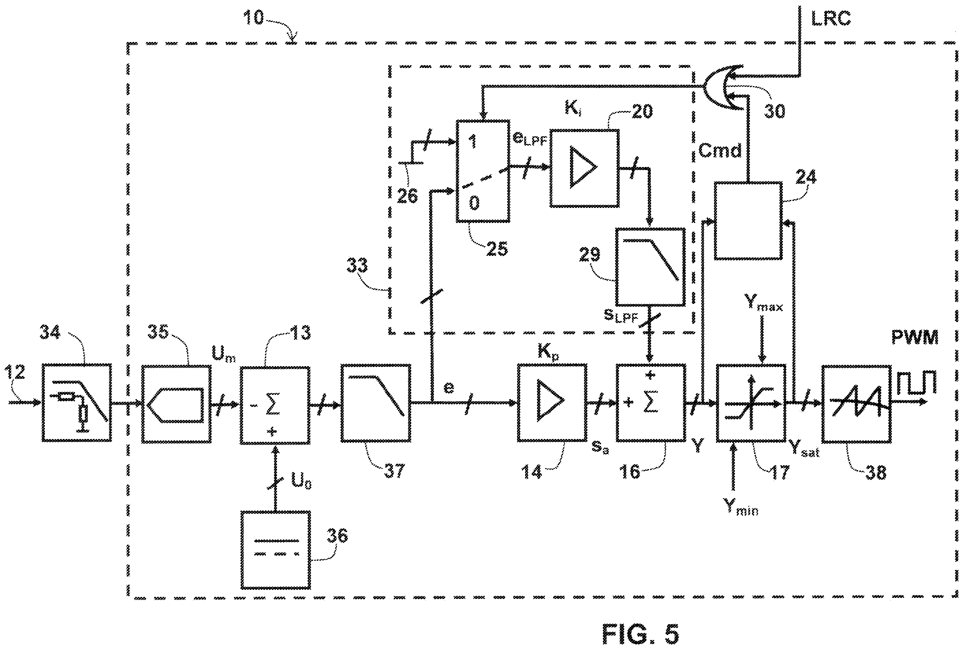

Dans un second mode de réalisation préféré de l'invention, dont le schéma de principe détaillé est donné sur la **Figure 5,** l'entité inventive a remplacé dans ce but l'intégrateur pur 15 du premier mode de réalisation par un filtre passe-bas 29.

C'est-à-dire que l'intégrateur pur 15 ayant une première fonction de transfert de forme FT=1/s est remplacé par un filtre 29 ayant une seconde fonction de transfert de la forme FT=1/ (1+ $\tau$s) (s étant la variable mathématique de Laplace, et $\tau$ étant la constante de temps du filtre).

Le filtre passe-bas 29 est de préférence numérique de seconde fonction transfert de la forme (transformée en z):

$$FT1(z) = \frac{b}{1-(1-b).Z^{-1}}$$

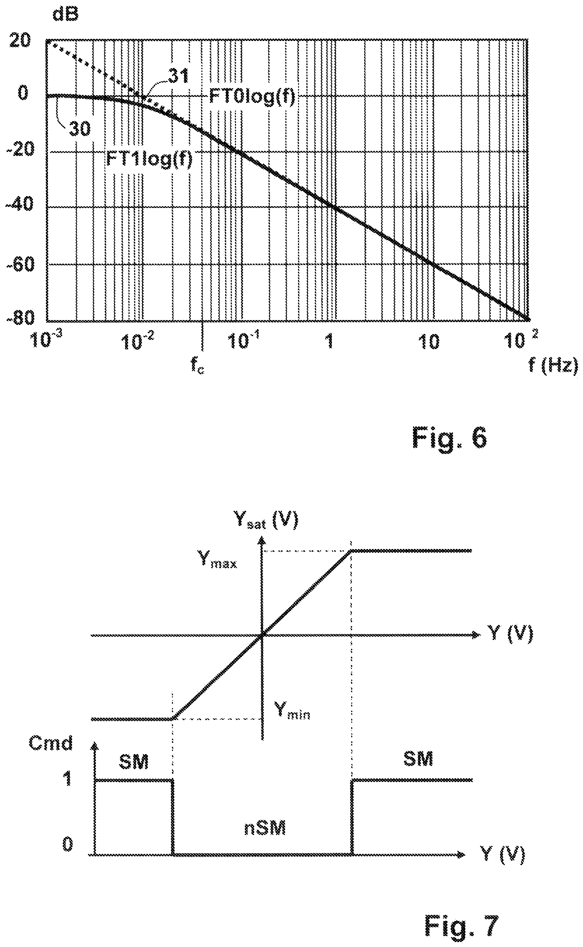

La **Figure 6** montre la réponse en fréquence de ce filtre 29 par rapport à un intégrateur numérique pur 15 ayant une première fonction de transfert de la forme:

$$FT0(z) = \frac{a}{1-Z^{-1}}$$

Le tracé dans le plan de Bode s'effectue par la transformation $Z(f) = e^{j.2\pi\frac{f}{fe}}$.

Les paramètres choisis sont:

$a = \dfrac{1}{2^{20}}$ avec une fréquence d'échantillonnage fe, par exemple de 64 KHz pour la première fonction de transfert de l'intégrateur pur 15 ;

$b = \dfrac{1}{2^{20}}$ avec une fréquence d'échantillonnage fe= 64 KHz pour la seconde fonction de transfert du filtre passe bas 29.

De préférence, la fréquence fe est choisie pour être supérieure à la fréquence de commande en PWM (« Pulse Width Modulation » en anglais) du courant d'excitation de l'alternateur et bien supérieure à la fréquence d'ondulation de la tension continue en sortie de l'alternateur.

On observe qu'au-delà de la fréquence de coupure, par exemple $f_c$= 30 mHz, le comportement du filtre passe bas 29 (courbe en trait plein 30) et celui de l'intégrateur pur 15 (courbe en trait pointillé 31) sont identiques.

Le gain en basse fréquence est fixé par le gain intégrateur $K_i$ du second amplificateur 20 situé devant le filtre passe-bas 29, de valeur prédéterminée, afin d'augmenter le gain de la boucle pour diminuer l'erreur statique.

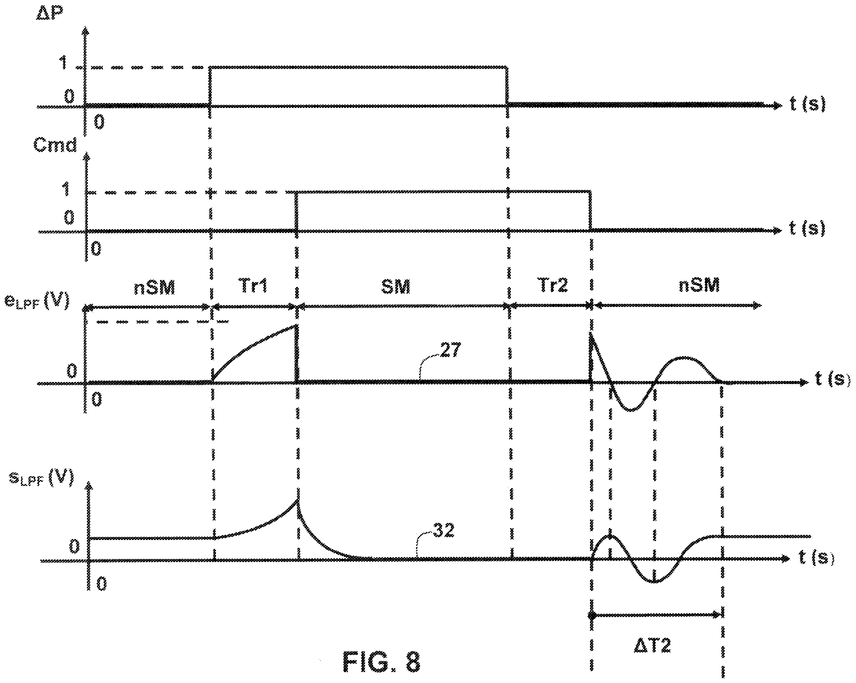

Comme le montrent bien les chronogrammes de la **Figure 8,** correspondant au second mode de réalisation préféré de l'invention, la mise en oeuvre de ce filtre passe-bas 29 permet de diminuer la valeur de tension de sortie $S_{LPF}$ du filtre passe-bas 29 pendant le mode saturé SM vers une valeur nulle 32 et d'obtenir une boucle de régulation du type P (proportionnelle uniquement) en mode saturé SM.

En effet, en appliquant une tension nulle 27 à l'entrée $e_{LPF}$ du filtre passe-bas 29 pendant le mode saturé SM, la valeur de la tension de sortie $s_{LPF}$ du filtre passe bas 29 décroît exponentiellement selon une équation du type :

$$s_{LPF}(t) = e^{-t/\tau}$$

Avec

    : $s_{LPF}$: tension du filtre de sortie passe bas 29
    t : variable temps
    $\tau$ : constante de temps du filtre

Comme le montrent les chronogrammes de la **Figure** 8, une boucle de régulation du type P présente l'avantage d'avoir une bonne réactivité pendant les transitoires du mode saturé SM vers le mode non saturé nSM.

En associant la mise en oeuvre d'un filtre passe bas 29 pour la réalisation de la partie intégrale 20, 29 de la boucle de régulation 10 à la détection conditionnelle de la saturation 23, un second temps de retour ΔT2 du mode saturé SM vers le mode non saturé nSM est extrèmement faible sur les applications équipées d'un alternateur 1 avec batterie 7 comparé à un temps de retour d'un système anti saturation à rétroaction calculée 18 connu de l'état de la technique **(Figure 2),** mais également comparé au premier temps de retour ΔT1 très faible du système anti saturation à détection conditionnelle 23 équipée d'un intégrateur pur 15 **(Figure 3).**

La connexion par le commutateur 25, commandé par le détecteur de saturation 24, du filtre passe-bas 29, de fréquence de coupure $f_c$ très basse, dans la partie intégrale 20, 29 de la boucle de régulation 10 permet d'obtenir un comportement très proche d'un intégrateur pur 15 durant la régulation en mode non saturé nSM.

L'avantage de ce filtre passe bas 29 est de pouvoir contrôler simplement le niveau de sortie $s_{LPF}$ du filtre 29 en cas de détection de la saturation SM de la boucle (via le signal de déconnexion Cmd) vers une valeur prédéterminée nulle 32 à partir d'une valeur de tension nulle 27 forcée à l'entrée du filtre passe bas 29 à l'aide du commutateur 25.

Ce commutateur 25 permet suivant l'état de la saturation de la boucle 10 de connecter l'entrée $e_{LPF}$ du filtre passe-bas 29 sur le signal d'erreur e de la boucle de régulation 10 en cas de non saturation nSM ou de sélectionner la dé-saturation du filtre passe bas 29 en cas de saturation SM détectée de la boucle de régulation 10.

L'avantage de ce dispositif électronique 33 est de permettre le passage rapide vers une régulation de type P en cas de détection de la saturation SM, et un retour rapide vers une valeur régulée attendue dans le cas où la saturation n'est plus détectée nSM.

L'ensemble des éléments du second mode de réalisation préféré d'une boucle de régulation PI 10 selon l'invention est repris sur la **Figure 5,** ainsi que d'autres détails:

- signal d'entrée 12 représentant la tension de la batterie 7 ou la tension de la borne « B+ » de l' alternateur 1;
- filtrage analogique 34 (filtre anti-repliement, anti-ondulation de tension), associé au convertisseur analogique numérique 35 et diviseur de tension 34 afin d'adapter le niveau de tension pour le convertisseur analogique numérique 35;
- convertisseur analogique numérique 35;
- moyens de calcul d'erreur 13 entre le signal de mesure $U_m$ et la valeur de consigne $U_0$;
- consigne numérique 36 générant la valeur de consigne $U_0$ souhaitée;
- filtre anti-repliement 37 associé à la décimation produite par la génération du signal de commande PWM;.
- premier amplificateur 14 de la partie proportionnelle de la boucle de régulation 10 (gain proportionnel $K_p$ ajusté afin de garantir la stabilité du dispositif régulateur 2 connecté à l'alternateur 1 connecté à la batterie 7);
- bloc additionneur 16 entre la partie proportionnelle 14 et la partie intégrale 20, 29;
- bloc de saturation 17 permettant d'adapter le format des données de la boucle de régulation 10 à celui de moyens de génération 38 du signal de commande PWM entre une valeur minimale $Y_{min}$ et une valeur maximale $Y_{max}$;
- moyens de génération 38 du signal de commande PWM (commandant les moyens de commande 11 du courant d'excitation $I_e$ de l'alternateur 1), réalisé par une comparaison entre un signal de référence triangulaire (appelé également signal « dent de scie ») et le signal de régulation $Y_{sat}$ issu du bloc de saturation 17;
- commutateur 25 connectant ou déconnectant la partie intégrale 20, 29 en fonction du signal de déconnexion Cmd généré par le bloc de saturation 17 et d'un signal annexe de la fonction régulateur, notamment un signal de contrôle de charge progressive LRC, combinés 39;

- second amplificateur 20 (avec un gain intégrateur $K_i$ ajusté afin de garantir la stabilité du dispositif régulateur 2 connecté à l'alternateur 1 connecté à la batterie 7);
- filtre passe bas 29 de fréquence de coupure $f_c$ de très basse fréquence réalisant la partie intégrale 20, 29 de la boucle de régulation 10;
- signal de déconnection Cmd du commutateur 25 représentant la saturation de la boucle de régulation 10 généré par le détecteur de saturation 24;
- signal de commande PWM commandant l'électronique de puissance 11 contrôlant le courant d'excitation le l'alternateur 1 ;
- signal annexe LRC permettant l'inhibition de la partie intégrale 20, 29 de la boucle de régulation 10 par une fonction régulateur annexe, tel qu'un signal de contrôle de charge progressive ("Load Response Control" en terminologie anglaise).

L'implémentation de la détection de la saturation dans le détecteur de saturation 24 est effectuée par un algorithme numérique illustré sur la **Figure 7.**

Les signaux suivants sont utilisés pour la détection de saturation :

Y : signal de régulation intermédiaire en entrée du bloc saturateur 17;
$Y_{sat}$ : signal de régulation en sortie du bloc saturateur 17;
Cmd : signal de commande de déconnexion.

L'algorithme de détection de la saturation est le suivant :

$$SI\ (Y=Y_{sat})\ ALORS\ Cmd = 0$$

SINON Cmd = 1

Il va de soi que la description ci-dessus s'appliquerait en des termes semblables à d'autres modèles de machines électriques tournantes à excitation que l'alternateur triphasé représenté sur la **Figure 1.**

Les valeurs numériques indiquées correspondent à des développements expérimentaux et des simulations sur ordinateurs réalisés par la société demanderesse, et ne sont données qu'à titre d'exemples.

L'invention embrasse donc toutes les variantes possibles de réalisation qui resteraient dans le cadre défini par les revendications ci-après.

## Revendications

1. Boucle de régulation (10) proportionnelle intégrale pour un dispositif régulateur numérique (2) de machine électrique tournante à excitation (1) de véhicule automobile du type de celles aptes à fonctionner en génératrice délivrant une tension de sortie ($U_b$+) ajustée par un courant d'excitation ($I_e$), ledit dispositif régulateur numérique (2) comportant des moyens de commande (11) dudit courant d'excitation ($I_e$) et ladite boucle de régulation (10) comprenant:

   - en entrée, des moyens de mesure (35) par échantillonnage de ladite tension de sortie ($U_b$+) générant un signal de mesure ($U_m$);
   - des moyens de calcul d'erreur (13) générant un signal d'erreur (e) égal à une différence entre ledit signal de mesure ($U_m$) et une valeur de consigne ($U_0$);
   - des moyens de traitement (14, 15, 16, 17, 18, 20) dudit signal d'erreur (e) générant un signal de régulation ($Y_{sat}$) comprenant en parallèle un premier amplificateur (14), un intégrateur(15) et un système anti-saturation (18);
   - en sortie, des moyens de génération (38) d'un signal de commande (PWM) commandant lesdits moyens de commande (11) en fonction dudit signal de régulation ($Y_{sat}$); **caractérisée en ce que** ledit système anti-saturation (23) est à détection conditionnelle (24).

2. Boucle de régulation (10) proportionnelle intégrale pour un dispositif régulateur numérique (2) de machine électrique tournante à excitation (1) de véhicule automobile selon la revendication 1, **caractérisée en ce que** ledit système anti-saturation (23) comprend un détecteur de saturation (24) générant un signal de déconnexion (Cmd) commandant un commutateur (25) déconnectant ledit intégrateur (15, 29) desdits moyens de calcul d'erreur (13) en cas de détection d'un état de saturation (SM) dudit signal de régulation ($Y_{sat}$).

3. Boucle de régulation (10) proportionnelle intégrale pour un dispositif régulateur numérique (2) de machine électrique tournante à excitation (1) de véhicule automobile selon la revendication 2, **caractérisée en ce que** ledit intégrateur (15, 29) est un intégrateur numérique pur (15).

4. Boucle de régulation (10) proportionnelle intégrale pour un dispositif régulateur numérique (2) de machine électrique tournante à excitation (1) de véhicule automobile selon la revendication 3, **caractérisée en ce que** ledit intégrateur numérique (15) présente une première fonction de transfert de la forme:

$$FT0(z) = \frac{a}{1 - Z^{-1}} \ .$$

5. Boucle de régulation (10) proportionnelle intégrale pour un dispositif régulateur numérique (2) de machine électrique tournante à excitation (1) de véhicule automobile selon la revendication 2, **caractérisée en ce que** ledit intégrateur (15, 29) est un filtre numérique basse-bas (29).

6. Boucle de régulation (10) proportionnelle intégrale pour un dispositif régulateur numérique (2) de machine électrique tournante à excitation (1) de véhicule automobile selon la revendication 5, **caractérisée en ce que** ledit filtre numérique (29) présente une seconde fonction de transfert de la forme:

$$FT1(z) = \frac{b}{1 - (1 - b).Z^{-1}}$$

7. Boucle de régulation (10) proportionnelle intégrale pour un dispositif régulateur numérique (2) de machine électrique tournante à excitation (1) de véhicule automobile selon la revendication 6, **caractérisée en ce qu'**une fréquence de coupure ($f_c$) dudit filtre numérique (29) est compris dans une bande de fréquence allant de 10 mHz à 1 Hz.

8. Boucle de régulation (10) proportionnelle intégrale pour un dispositif régulateur numérique (2) de machine électrique tournante à excitation (1) de véhicule automobile selon l'une quelconque des revendications 2 à 7 précédentes, **caractérisée en ce qu'**elle comprend en outre un second amplificateur (14) en série avec ledit intégrateur (15, 29).

9. Boucle de régulation (10) proportionnelle intégrale pour un dispositif régulateur numérique (2) de machine électrique tournante à excitation (1) de véhicule automobile selon la revendication 9, **caractérisée en ce qu'**un gain intégrateur ($K_i$) dudit second amplificateur (14) présente une valeur prédéterminée de manière à diminuer une erreur statique tout en garantissant une stabilité dudit dispositif régulateur numérique (2).

10. Boucle de régulation (10) proportionnelle intégrale pour un dispositif régulateur numérique (2) de machine électrique tournante à excitation (1) de véhicule automobile selon l'une quelconque des revendications 2 à 9 précédentes, **caractérisée en ce que** ledit commutateur (25) est commandé en outre par un signal de contrôle de charge progressive (LRC).

**Patentansprüche**

1. Proportional-Integral-Regulierungsschleife (10) für eine digitale Regulierungsvorrichtung (2) einer drehenden elektrischen Maschine (1) mit Erregung für Kraftfahrzeug des Typs, der als Generator arbeiten kann, der eine durch einen Erregungsstrom ($I_e$) eingestellte Ausgangsspannung ($U_b$+) liefern kann, wobei die digitale Regulierungsvorrichtung (2) Mittel (11) zum Steuern des Erregungsstroms ($I_e$) und der Regulierungsschleife (10) umfasst, die Folgendes umfassen:

- eingangsseitig Mittel (35) zum Messen durch Abtasten der Ausgangsspannung ($U_b$+), die ein Messsignal ($U_m$) erzeugen;
- Fehlerberechnungsmittel (13), die ein Fehlersignal (e) erzeugen, das gleich einer Differenz zwischen dem Messsignal ($U_m$) und einem Sollwert ($U_0$) ist;
- Mittel (14, 15, 16, 17, 18, 20) zum Verarbeiten des Fehlersignals (e), die ein Regulierungssignal ($Y_{sat}$) erzeugen und in einer Parallelschaltung einen ersten Verstärker (14), einen Integrator (15) und ein Sättigungsverhinderungssystem (18) enthalten;

- ausgangsseitig Mittel (38) zum Erzeugen eines Steuersignals (PWM), das die Steuermittel (11) als Funktion des Regulierungssignals (Y$_{sat}$) steuert; **dadurch gekennzeichnet, dass** das Sättigungsverhinderungssystem (23) eine bedingte Detektion (24) verwendet.

2. Proportional-Integral-Regulierungsschleife (10) für eine digitale Regulierungsvorrichtung (2) einer drehenden elektrischen Maschine (1) mit Erregung für Kraftfahrzeug nach Anspruch 1, **dadurch gekennzeichnet, dass** das Sättigungsverhinderungssystem (23) einen Sättigungsdetektor (24) umfasst, der ein Trennsignal (Cmd) erzeugt, das einen Kommutator (25) steuert, der den Integrator (15, 29) im Fall der Detektion eines Sättigungszustands (SM) des Regulierungssignals (Y$_{sat}$) von den Fehlerberechnungsmitteln (13) trennt.

3. Proportional-Integral-Regulierungsschleife (10) für eine digitale Regulierungsvorrichtung (2) einer drehenden elektrischen Maschine (1) mit Erregung für Kraftfahrzeug nach Anspruch 2, **dadurch gekennzeichnet, dass** der Integrator (15, 29) ein rein digitaler Integrator (15) ist.

4. Proportional-Integral-Regulierungsschleife (10) für eine digitale Regulierungsvorrichtung (2) einer drehenden elektrischen Maschine (1) mit Erregung für Kraftfahrzeug nach Anspruch 3, **dadurch gekennzeichnet, dass** der digitale Integrator (15) eine erste Übertragungsfunktion mit der folgenden Form umfasst:

$$FT0(z) = \frac{a}{1 - Z^{-1}}.$$

5. Proportional-Integral-Regulierungsschleife (10) für eine digitale Regulierungsvorrichtung (2) einer drehenden elektrischen Maschine (1) mit Erregung für Kraftfahrzeug nach Anspruch 2, **dadurch gekennzeichnet, dass** der Integrator (15, 29) ein digitales Tiefpassfilter (29) ist.

6. Proportional-Integral-Regulierungsschleife (10) für eine digitale Regulierungsvorrichtung (2) einer drehenden elektrischen Maschine (1) mit Erregung für Kraftfahrzeug nach Anspruch 5, **dadurch gekennzeichnet, dass** das digitale Filter (29) eine zweite Übertragungsfunktion mit der folgenden Form aufweist:

$$FT1(z) = \frac{b}{1 - (1 - b).Z^{-1}}.$$

7. Proportional-Integral-Regulierungsschleife (10) für eine digitale Regulierungsvorrichtung (2) einer drehenden elektrischen Maschine (1) mit Erregung für Kraftfahrzeug nach Anspruch 6, **dadurch gekennzeichnet, dass** eine Kappungsfrequenz (f$_c$) des digitalen Filters (29) in einem Frequenzband von 10 mHz bis 1 Hz liegt.

8. Proportional-Integral-Regulierungsschleife (10) für eine digitale Regulierungsvorrichtung (2) einer drehenden elektrischen Maschine (1) mit Erregung für Kraftfahrzeug nach einem der vorhergehenden Ansprüche 2 bis 7, **dadurch gekennzeichnet, dass** sie außerdem einen zweiten Verstärker (14) in Reihe mit dem Integrator (15, 29) umfasst.

9. Proportional-Integral-Regulierungsschleife (10) für eine digitale Regulierungsvorrichtung (2) einer drehenden elektrischen Maschine (1) mit Erregung für Kraftfahrzeug nach Anspruch 9, **dadurch gekennzeichnet, dass** ein Integratorverstärkungsfaktor (K$_i$) des zweiten Verstärkers (14) einen vorgegebenen Wert aufweist, derart, dass ein statischer Fehler unter Gewährleistung der Stabilität der digitalen Regulierungsvorrichtung (2) verringert wird.

10. Proportional-Integral-Regulierungsschleife (10) für eine digitale Regulierungsvorrichtung (2) einer drehenden elektrischen Maschine (1) mit Erregung für Kraftfahrzeug nach einem der vorhergehenden Ansprüche 2 bis 9, **dadurch gekennzeichnet, dass** der Kommutator (25) außerdem durch ein progressives Ladungssteuersignal (LRC) gesteuert wird.

**Claims**

1. Proportional integral regulation loop (10) for a digital regulator device (2) of an excitation rotating electrical machine (1) of a motor vehicle of the type of those capable of operating as generator delivering an output voltage (U$_b$+)

adjusted by an excitation current ($I_e$), said digital regulator device (2) comprising control means (11) for controlling said excitation current ($I_e$) and said regulation loop (10) comprising:

- at the input, means for measuring (35) by sampling said output voltage ($U_b+$) generating a measurement signal ($U_m$) ;
- error computation means (13) generating an error signal (e) equal to a difference between said measurement signal ($U_m$) and a setpoint value ($U_o$) ;
- processing means (14, 15, 16, 17, 18, 20) for processing said error signal (e) generating a regulation signal ($Y_{sat}$) comprising, in parallel, a first amplifier (14), an integrator (15) and an anti-saturation system (18);
- at the output, generation means (38) for generating a control signal (PWM) controlling said control means (11) as a function of said regulation signal ($Y_{sat}$) ; **characterized in that** said anti-saturation system (23) includes conditional detection (24).

2. Proportional integral regulation loop (10) for a digital regulator device (2) of an excitation rotating electrical machine (1) of a motor vehicle according to Claim 1, **characterized in that** said anti-saturation system (23) comprises a saturation detector (24) generating a disconnection signal (Cmd) controlling a switch (25) disconnecting said integrator (15, 29) from said error computation means (13) in case of detection of a state of saturation (SM) of said regulation signal ($Y_{sat}$).

3. Proportional integral regulation loop (10) for a digital regulator device (2) of an excitation rotating electrical machine (1) of a motor vehicle according to Claim 2, **characterized in that** said integrator (15, 29) is a pure digital integrator (15).

4. Proportional integral regulation loop (10) for a digital regulator device (2) of an excitation rotating electrical machine (1) of a motor vehicle according to Claim 3, **characterized in that** said digital integrator (15) has a first transfer function of the form:

$$FT0(z) = \frac{a}{1 - Z^{-1}} \; .$$

5. Proportional integral regulation loop (10) for a digital regulator device (2) of an excitation rotating electrical machine (1) of a motor vehicle according to Claim 2, **characterized in** said integrator (15, 29) is a low-pass digital filter (29).

6. Proportional integral regulation loop (10) for a digital regulator device (2) of an excitation rotating electrical machine (1) of a motor vehicle according to Claim 5, **characterized in that** said digital filter (29) has a second transfer function of the form:

$$FT1(z) = \frac{b}{1 - (1 - b).Z^{-1}}$$

7. Proportional integral regulation loop (10) for a digital regulator device (2) of an excitation rotating electrical machine (1) of a motor vehicle according to Claim 6, **characterized in that** a cut off frequency ($f_c$) of said digital filter (29) lies in a frequency band ranging from 10 mHz to 1 Hz.

8. Proportional integral regulation loop (10) for a digital regulator device (2) of an excitation rotating electrical machine (1) of a motor vehicle according to any one of the preceding Claims 2 to 7, **characterized in that** it further comprises a second amplifier (14) in series with said integrator (15, 29).

9. Proportional integral regulation loop (10) for a digital regulator device (2) of an excitation rotating electrical machine (1) of a motor vehicle according to Claim 9, **characterized in that** an integrator gain ($K_i$) of said second amplifier (14) has a predetermined value so as to reduce a static error while guaranteeing stability of said digital regulator device (2).

10. Proportional integral regulation loop (10) for a digital regulator device (2) of an excitation rotating electrical machine (1) of a motor vehicle according to any one of the preceding Claims 2 to 9, **characterized in that** said switch (25) is further controlled by a progressive load control signal (LRC).

FIG. 1 (Etat de la technique)

FIG. 2 (Etat de la technique)

**FIG. 3**

EP 3 072 231 B1

FIG. 4

EP 3 072 231 B1

FIG. 5

**Fig. 6**

**Fig. 7**

FIG. 8

EP 3 072 231 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0481862 A

- EP 0802606 A

**Littérature non-brevet citée dans la description**

- An High Voltage CMOS Voltage Regulator for automotive alternators with programmable functionnalities and full reverse polarity capability. **P. CHASSARD ; L. LABISTE ; P. TISSERAND et al.** Design, Automation & Test in Europe Conference & Exhibition (DATE). EDAA, 2010

- Presentation of an Efficient Design Methodology for FPGA. Implementation of Control Systems. Application to the Design of Antiwindup PI Controller. **L. CHAARABI ; E. MONMASSON ; I. SLAMA-BELKHODJA.** 28 th Annual Conference of the IECON. IEEE, 2002